# EUROPEAN PATENT APPLICATION

(11) **EP 1 411 482 A1**
(43) Date of publication of application: **21.04.2004**
(21) Application number: 02257120.2
(22) Date of filing: 14.10.2002
(51) Int. Cl.: G07F 19/00

(54) **Improved token-management system**

(71) Applicant: Lucheon Vouchers Ltd trading as Accor Services, London SW1V 2FS (GB)
(72) Inventor: Reddihough, John Philip, London, SE13 5QL (GB); Dovero, Stephane, Wandsworth, London, SW18 3ET (GB); Walder, Alan William, London, W4 2QH (GB)
(74) Representative: Orian, Yvette Suzanne

(57) **Abstract**

In a token-management system, the current value of token credit allocated to a user by a token-issuer is stored in a memory in the form of a user account data. When the user wishes to spend token credit, the user sends the issuer an authorization to reimburse the appropriate amount of token credit to a redeemer who provides the user with goods or services. In response to a valid reimbursement authorization, the issuer debits the user account and issues a command to trigger a corresponding payment to the redeemer. The system eliminates the need for physical tokens, and combines the acts of exchanging a token and requesting reimbursement of an accepted token. Reimbursement requests can be communicated to the issuer by electronics means, notably via telephone or the Internet.

## Description

### Field Of The Invention

The present invention relates to the field of token (or voucher) management schemes and, more particularly, to a token management system in which physical tokens are not required.

### Background Art

A variety of commercial schemes exist in which a User who holds a token or voucher can exchange this token (or voucher) for goods or services of a specified kind, that is, either goods/services of a nature that is pre-specified, or goods/services of unspecified nature offered by a pre-specified set of merchants/service providers.

In general, the token or voucher is issued by an incentive management organization, which can be designated "the Issuer". The token or voucher can be issued directly to the User or, in many cases, the token (voucher) is issued to a company wishing to provide awards or incentives to its employees or customers (who will be the "Users"). This intermediary company can be designated the "Client" since it will be the client of the Issuer and will usually pay the Issuer a charge, in addition to the monetary value of the tokens/vouchers purchased. The provider of the goods or services who accepts the token/voucher, presents the accepted token or voucher to the Issuer thereof, who then arranges for reimbursement of the monetary value of the goods/services that have been provided. The provider of goods and services can be designated a "Redeemer" since he redeems the exchanged vouchers.

In general, the token/voucher is product-specific, that is, it can only be exchanged for goods or services of a pre-specified nature. An example of this kind of scheme is the well-known Luncheon Voucher® system, in which vouchers having a stated monetary value can be exchanged only for food and drink.

In the present document, including the claims, the expression "token" will be used to cover both items having a value expressed in terms of units of a product (e.g. one apple, one car-wash, one hour's childcare, etc.) and items whose value is expressed in terms of a monetary amount (for which the term "voucher" is often used). Thus, in the present document the expression "tokens" encompasses vouchers.

Furthermore, in the present document, the expression "product" is intended to encompass both goods and services. Moreover, the expression "token management schemes" will be used herein to designate commercial schemes (whether incentive schemes or otherwise) in which tokens are issued, exchanged for a product, and redeemed (such that the supplier of the product is reimbursed for supply of the product), and the token is only exchangeable for goods or services of a specified kind, that is, either goods/services of a nature that is pre-specified, or goods/ services offered by a pre-specified set of merchants/service providers.

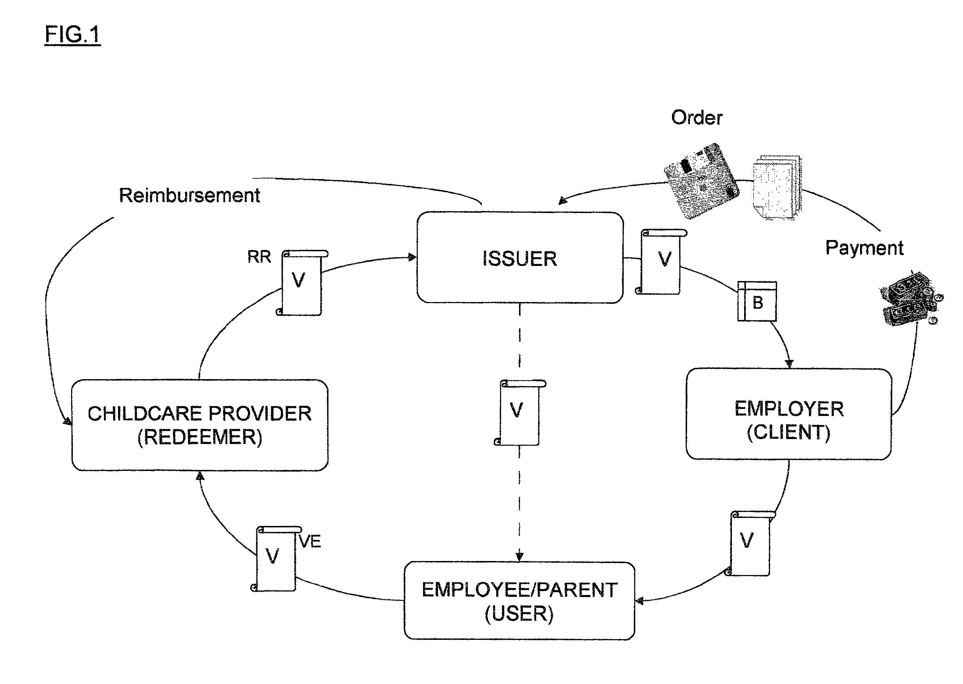

To aid understanding there will now be described an example of a known voucher-management system in which the vouchers can be exchanged for childcare services. Fig.1 illustrates the parties involved in the known childcare-voucher management system, and the main interactions between them.

As illustrated in Fig.1, in this system the Issuer of the childcare vouchers forms a relationship with a Client company which wishes to provide childcare vouchers to its employees, either as a perk or benefit, or in lieu of part of the employee's salary. The employer ("Client") decides, either alone or in consultation with the relevant employees, that Employee A will receive, say, £200 of childcare vouchers per month, Employee B will receive, say, £250 of childcare vouchers per month, etc. The Client then prepares an Order summarizing the employees that are to receive vouchers and the value of the childcare vouchers that they are to receive in the coming issuing period (typically the coming month). The Order can be in various forms, notably in the form of a document or a computer file. The Client sends the Order to the Issuer, typically by mail or via electronic file transfer.

In response to receiving the Client's order, the Issuer sends the Client a bill (item B in Fig.1) for the total vouchers required to fill the order. The Client makes a payment to settle the Issuer's bill, and then the vouchers are dispatched to the Client in the mail or via courier. The vouchers are distributed to the various employees ("Users"), for example with their monthly pay statements. However, in some cases it may be preferred for vouchers to be dispatched directly from the Issuer to the User.

The employee ("User") arranges with his childcare provider that all or a part of the payment due for providing childcare services will be met by voucher payments. The childcare provider ("Redeemer"), which typically will be a nursery or an individual, registers beforehand with the Issuer of the vouchers, for example to provide details of a bank account into which reimbursements can be paid or of an address to which cheques can be sent. Also, it may be necessary for the Issuer to check that the childcare provider ("Redeemer") meets certain criteria set by government regulations.

The User hands over a certain number of vouchers to the childcare provider ("Redeemer") in exchange for provision of childcare services - this exchange of one or more vouchers for a product is designated VE in Fig.1 (standing for "Voucher Exchange").

The childcare provider ("Redeemer") will wish to receive a monetary reimbursement for the childcare services that have been provided and so posts the exchanged vouchers to the Issuer, as part of a Reimbursement Request (designated RR in Fig.1) asking for the vouchers to be redeemed. Typically, the Redeemer may make a reimbursement request once a month redeeming, for example, four childcare vouchers at a time. In response to receipt of a valid Reimbursement Request, the Issuer makes a reimbursement by mailing a cheque to the Redeemer or making an electronic bank transfer of funds into the Redeemer's bank account. In some cases a query will be raised before reimbursement is made - for example in a case where there is uncertainty about the identity of the Redeemer requesting reimbursement, or the validity of the reimbursement request. The overall time required for the Redeemer to receive a payment credited to a bank account may easily extend to over a week.

Existing token management schemes suffer from a number of disadvantages. In particular, there are a large number of steps involved in administering the printing and issuance of the tokens, the distribution of the tokens to the User, and the reimbursement of the Redeemer, with concomitant time delays, costs and a requirement to commit staff time. The number and complexity of these steps increases in cases where the User obtains tokens from the Issuer via a Client (for example, the User's employer). Moreover, the time and talents of skilled staff are often squandered in handling mundane ancillary requests, such as requests for stationery (reimbursement request forms, instruction guides, etc.), requests for names and addresses of potential redeemers, and the like.

In existing schemes, tokens can become damaged or get lost. Moreover, the delay between the time when a Redeemer accepts a token and the time when the Redeemer receives reimbursement can be unacceptably long. The Redeemer generally must post the accepted token to the Issuer and await reimbursement, either via receipt of a cheque through the mail, or via a bank transfer. Severe problems can occur at times of postal disruption, or when tokens are lost in the mail.

In known token management systems it is difficult to trace where a given token is in the cycle of circulation from Issuer to User to Redeemer back to Issuer, such that it may become impossible to pinpoint in an objective manner where a problem has arisen, especially if there is a lack of candour from a User, Redeemer or Client.

Moreover, if fraud is to be avoided, special measures must be employed, for example, to ensure security in the transmission of tokens to the User and to ensure that reimbursement is only made to an appropriate Redeemer on occurrence of a real exchange of a token for a product. Additional issues relating to security/avoidance of fraud can arise in certain systems, such as those involving childcare vouchers, when tax or social security payments/rebates are associated with the issuance of the vouchers.

In order to improve security, it has already been proposed that tokens used in token management schemes should be provided with unique identification numbers printed on the physical token and/or the name of the intended User should be printed thereon. Mailing tokens directly to the User can also increase security and reduce the time delays in the token circulation cycle.

The present Applicant has also developed a concept which eliminates one of the steps in the token circulation cycle, namely configuring the system to enable Redeemers to make Reimbursement Requests by telephone, rather than by physical sending of exchanged tokens to the Issuer. In order to take advantage of this possibility, the Redeemer must notify the Issuer of the code number allocated to each token which is being redeemed. Reimbursement will only be authorized if the Redeemer quotes valid token code numbers.

Although the above developments address certain of the security issues inherent in token-management systems, problems of time delay remain, along with an undesirably large number of administrative steps involving effort and time from staff.

It could be envisaged to use a smart-card to serve as the token. However, such an approach has a number of disadvantages, not least the need for special equipment both to enable the User to "load" his card with credits and to transfer credits to the Redeemer.

### Summary Of The Invention

It has been realized that, by exploiting modern means of communication more fully, physical tokens can be eliminated and many of the problems inherent in the known token management systems can be overcome. More particularly, physical tokens can be replaced by a record of a "value" attributed to a User, which value can be increased as the User acquires tokens, and reduced as the User spends his tokens/reimbursements are made to a Redeemer. According to the preferred embodiments of the invention, the records of Users' credit are stored in a centralized manner by the Issuer.

Thus, it is to be understood that in the present document the expressions "token" and "voucher" can and often do refer to "disembodied" items, wherein the value (whether monetary or otherwise) of the token or voucher is credited to a User, or reimbursed to a Redeemer, without the physical handing over of the token/voucher.

More particularly, the preferred embodiments of the present invention provide a token-management system in which physical tokens are dispensed with whilst still ensuring that reimbursement to a Redeemer only takes place following authorization by the User, and the need for special equipment is kept to a minimum.

Further, the preferred embodiments of the invention provide a token-management system in which many tasks are eliminated or automated, thus reducing costs and involving lower expenditure of staff time.

The preferred embodiments of the invention also provide a token-management system in which circulation of physical tokens is no longer necessary, thus overcoming the prior art problems of time delay in availability of vouchers and/or reimbursement, and eliminating problems arising from loss or damage to tokens.

The preferred embodiments of the invention yet further provide a token-management system having improved recording of transactions, notably providing a full record of the various stages in circulation of a token. Moreover, appropriate items of this transaction information can be made available to the various participants in the system (users, clients, redeemers).

The preferred embodiments of the invention still further provide a token-management system having in-built features to ensure security in generation, spending and reimbursement of token credit.

The present invention provides a token management system in which tokens are credits offerable by a user in exchange for products of a specified kind, the token credit being issued to users by an issuer, the system comprising: memory means for storing user account data for each user; input means for receiving an order, said order specifying an amount of token credit to be allocated to a user; memory update means adapted to update user account data held in the memory means whereby to add to the user account the amount of token credit allocated to said user in said order; input means for receiving a reimbursement authorization from a user, said reimbursement authorization including data indicating the amount of token credit to be reimbursed, and data identifying a redeemer to whom reimbursement is to be made; and verification means adapted to consult the user account data held in the memory means whereby to verify that the user issuing the reimbursement authorization has token credit sufficient to pay the token credit amount specified in the reimbursement authorization and, when the token credit in the user account is sufficient, to validate the received reimbursement authorization; wherein the memory update means is further adapted, when a reimbursement authorization is validated, to update the user account data whereby to debit from the user account the amount of token credit specified in the reimbursement authorization; and wherein the system further comprises means for issuing a payment command in response to the verification means validating a reimbursement authorization, said payment command ordering a payment to the redeemer specified in the validated reimbursement authorization of an amount based on the token credit specified in the validated reimbursement authorization.

In preferred embodiments of the invention, User accounts are established centrally by the Issuer, who also implements the updating of User account balances. Advantageously, the token-management system of the present invention makes use of electronic means of communication, notably telephone and computer networks, to implement crediting of a User account (by analogy with issuance of a token/voucher), and debiting of a User account (by analogy with physical exchange of a voucher). Moreover, in the system of the invention there is a single process (authorization of reimbursement) which replaces the two previous separate processes of: handing over a token/voucher in exchange for a product, and making a request for reimbursement of the exchanged token/voucher.

The system of the present invention enables the token/voucher principle to be implemented without any physical support, that is, there is no longer any need to circulate a physical token/voucher between an Issuer, a Client (if there is one), a User and a Redeemer. This cuts down the administrative overhead of the system, thus freeing staff for other functions. Moreover, by eliminating the circulation of physical tokens/vouchers, the token-management system of the invention avoids the time delays inherent in traditional token/voucher-based systems.

The token-management system of the present invention preferably includes means for determining the payment status of an order, for example, whether or not the order has been paid for, whether the charge for the order represents an amount which is within the credit limit of the ordering party (in a case where the Issuer is prepared to extend a certain measure of credit to ordering parties), or this is an order for which no charge will be made. User account balances will only be updated with the amounts of token credit specified in the order if the status determined for that order is appropriate.

In some cases, the party placing an order may wish for the specified amounts of token credit to be allocated to users only at or after a specified date - here termed "the release date". For example, in the case where an employer (Client) orders token credit for its employees (the Users), it may be desired to set the release date equal to the date when the employees (Users) receive their monthly salary. Preferred embodiments of the present invention cater for this possibility by including means for determining a release date applicable to an order, and by arranging for the memory update means to update user account data only when the release date for that order has been reached or passed.

The token credit may be denominated in units of product, in which case the system further comprises calculation means for processing a reimbursement authorization whereby to convert the specified token credit into a monetary amount to be paid to the redeemer. For example, if one token corresponds to an eye examination, when a user authorizes redemption of one token, the calculation means will calculate a monetary amount to be paid to the redeemer for the eye examination, typically based upon a tariff previously agreed with the redeemer in question. It will be understood that the token-management system of the present invention supports reimbursement of different amounts to different redeemers when the same unit of token credit is redeemed.

In a similar way, the token credit units can be defined so as to be currency-independent. Advantageously, in embodiments offering this feature there is provided a stored indication of monetary equivalents of a token credit, in different currencies, and a means for calculating a monetary equivalent, in a specified currency, of a specified amount of token credit.

In preferred embodiments of the invention, when the User interacts with the Issuer the User identity is indicated by input of an identification code and confirmed by input of a correct personal identification number (PIN). Only when the User's identity has been successfully confirmed will the Issuer process a reimbursement authorization from this User or release transaction or account data to this User. In general, the identification code or number is a unique character string (symbols, letters and/or numbers) issued to the User when he is first registered on the system.

In embodiments of the invention in which reimbursement authorizations can be received by telephone, it is preferred to adapt the system to use Calling Line Identification (CLID) techniques so that inputting of the identification code can be avoided. More particularly, in such embodiments, the telephone number of the calling party is determined from CLID and this is compared with telephone numbers stored for the respective Users registered on the system. If the caller's telephone number uniquely matches one User, U₁, amongst the registered Users, then that telephone number identifies the caller as User U₁. Accordingly, it is unnecessary to make the User to input his identification code. The system can pass directly to the next step in its operation.

Preferably, the user can set his own PIN, so as to avoid the need to provide the User with a card or document bearing this number. However, in embodiments providing this feature, in order to ensure security, at times before the User has set his PIN, the User must input at least one additional data item besides the identification code. The security of the overall system is improved if the User obtains his identification code and the at least one additional data item from two different sources. Preferably, the at least one additional data item is a data item having "real world" significance so that it will be memorable for the User and avoid the need for the User to have a special card bearing code information. For example, the additional data could consist of or include the current balance of the User's account with the Issuer, the User obtaining this data, for example, from the human resources department of his employer. The User can be prompted to input this additional data as answers to security questions put to him by the system.

It is advantageous for the User to be provided with a confirmation that his reimbursement authorization has been validated. In that way the User can have confidence that he will not be subject to recriminations from the Redeemer. However, it can occur that the communications channel between the User and the Issuer is interrupted at a time when the User has sent the Issuer a reimbursement authorization but has not yet received back a confirmation that the reimbursement authorization has been validated. Thus, the User does not know for certain that the desired reimbursement will be made. Preferred embodiments of the present invention are adapted to enable the User to retrieve transaction data, notably details of the preceding validated reimbursement authorization received from said User. In this way it is a simple matter for the User to re-establish a communications channel with the Issuer and check that the desired reimbursement is underway. Moreover, the User can retrieve and review details of previous transactions in order to monitor past spending of his tokens.

In a similar way, a Redeemer may desire to check that a due reimbursement has been authorized by the User. Thus, preferred embodiments of the present invention are adapted to provide a Redeemer with certain transaction details, notably data relating to the preceding validated reimbursement authorization received for reimbursement of this Redeemer.

The token-management system of the present invention can be rendered more congenial to use by reducing the time and complexity of the reimbursement authorization operation that the User must perform. One way in which this can be achieved is by providing the User with an indication of the Redeemer who was credited as a result of the preceding reimbursement authorization, and allowing the User to indicate whether or not the same Redeemer is to be credited in the current reimbursement authorization. In many token-management systems (for example, in a childcare-voucher management system), the Redeemer will be the same for substantially all of the reimbursements. Thus, this feature is of real benefit to the User, reducing the time spent in authorizing reimbursements and the need to recall and input codes to identify the Redeemer.

In the token-management system of the present invention, it is advantageous to be able to track the progress of an order. In particular, in the preferred embodiments of the present invention an order can be pending, in which case creation of the order has begun but values of the order data have not been finalized, for example because the Client inputting the order has been interrupted. Alternatively, once the details of the order have been finalized the order can be designated a "validated" order. Furthermore, when the Issuer has received payment for a validated order (or it has been determined that pre-payment is not essential - for example, because the ordering party has sufficient credit with the Issuer) the order can be designated "closed", and updating of User account balances takes place (subject, in some cases, to verification that a release date has been reached). The status of a given order can be tracked using a flag whose value changes according to order status. The system can be configured to allow this flag value to be checked by various participants in the system, such as the Client and the User, as well as by the Issuer's server.

The token-management system of the present invention can incorporate an automated document-ordering module, so as to obviate the need for skilled staff to spend time in noting the identity of requested documents and the name and address of the requestor.

The token-management system of the present invention can be applied in a wide variety of fields. One field in which the system can be applied to particular advantage is in the management of childcare payments. More particularly, the present invention provides a childcare-voucher management system, comprising a token-management system as described above, in which the tokens are credits exchangeable for childcare services.

The token-management system according to the present invention can be implemented using an appropriately-programmed computer system, preferably comprising a front end enabling telephone access and a front end enabling Internet (web) access. The present invention further provides such a computer system adapted to implement the above-described token-management system. The present invention yet further provides a computer program product which, when loaded on an appropriately-configured general-purpose computer system, causes the system to implement the above-described token-management system.

### Brief Description of the Drawings

Further features and advantages of the present invention will become apparent from the following description of preferred embodiments thereof, given by way of example, in association with the accompanying drawings, in which:
Fig.1 illustrates the main participants in one example of a known voucher-management scheme;
Fig.2 is a diagram illustrating the main participants in a childcare-voucher management scheme serving as one embodiment of the present invention;
Fig.3 is a diagram illustrating processes in the scheme of Fig.2 that replace the operations of issuance, exchange and reimbursement of physical vouchers performed in known systems;
Fig.4 is a block diagram indicating the main elements in a childcare-voucher management system according to a preferred embodiment of the present invention;
Fig.5 is a flow diagram indicating the steps in the placing and processing of an order in the preferred embodiment illustrated in Fig.4;
Fig.6 is a flow diagram indicating the steps involved when a User accesses the Issuer's computer system for the first time, in the preferred embodiment illustrated in Fig.4, in which:
Fig.6A illustrates the general case;
Fig.6B illustrates the case where the User accesses the Issuer's computer system by a telephone call; and
Fig.6C illustrates the case where the User accesses the Issuer's computer system by using a computer to access the Issuer's website;
Fig. 7 is a flow diagram indicating the steps involved when a User accesses the Issuer's computer system on a subsequent occasion, in the preferred embodiment illustrated in Fig.4, in which:
Fig.7A illustrates the general case;
Fig.7B illustrates the case where the User accesses the Issuer's computer system by a telephone call; and
Fig.7C illustrates the case where the User accesses the Issuer's computer system by using a computer to access the Issuer's website;
Fig.8 is a flow diagram indicating the steps involved when a User sends a reimbursement authorization to the Issuer, in which:
Fig.8A outlines the general process, and
Fig.8B illustrates a preferred process when a User uses a telephone to issue the reimbursement authorization.

Fig.9 is a diagram illustrating an alternative embodiment of the present invention.

### Detailed Description of the Preferred Embodiments

A preferred embodiment of the token-management system of the present invention will now be described in the context of one particular example of a childcare-voucher management system. However, it is to be understood that the present invention is more widely applicable to any token-management system in which tokens exchangeable for products of a specified kind (products of a specified nature and/or products of any nature offered by a specified set of merchants/service providers) are credited to a User, exchanged for a product, and a corresponding reimbursement made to the provider of the product (Redeemer).

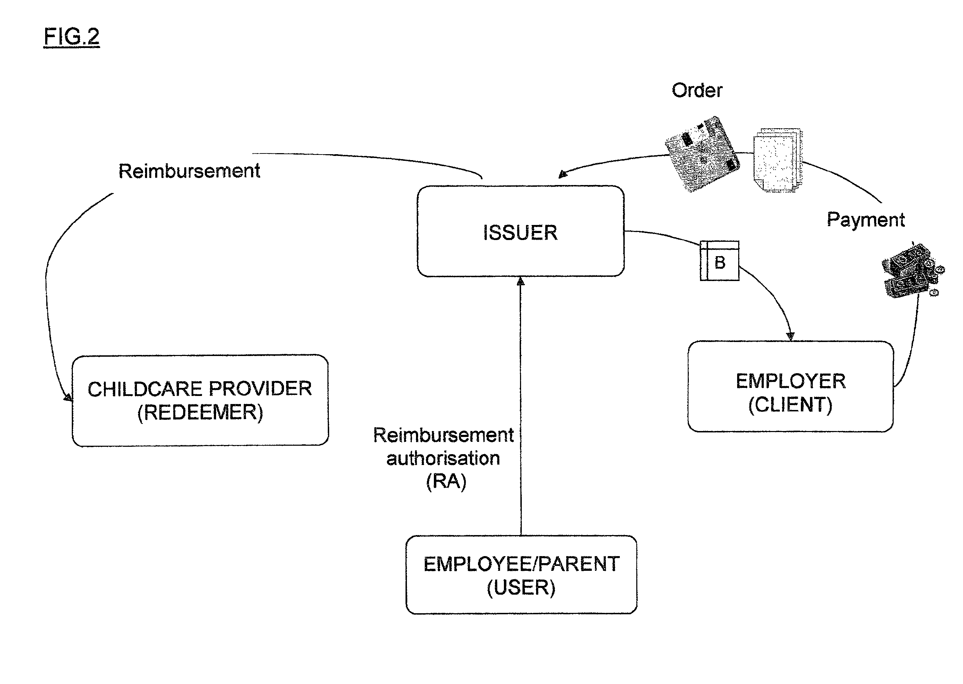

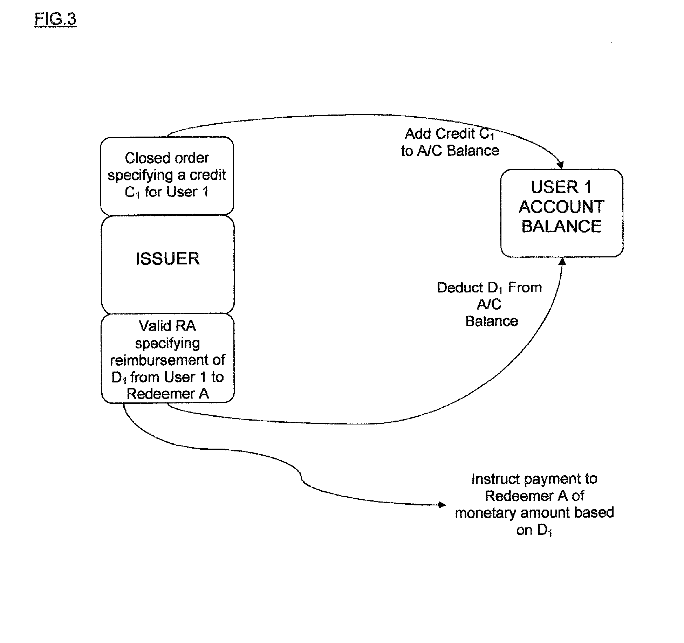

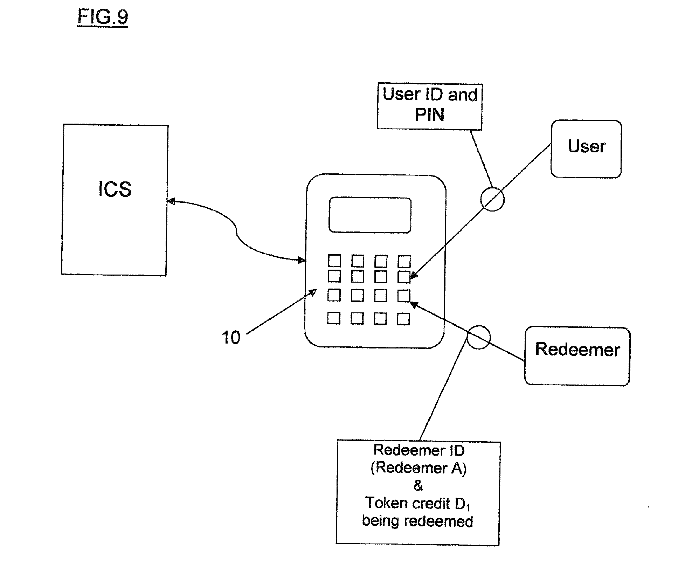

Some noteworthy features of the present invention will first be outlined with reference to the diagrams of Figs. 2 and 3, and then a preferred embodiment of the invention will be described in detail with reference to Figs. 4 to 8. An alternative embodiment of the invention will then be described with reference to Fig.9.

Fig.2 illustrates in schematic form the main participants in the childcare-voucher management system of the preferred embodiment of the present invention, and the main interactions between them. Fig.3 illustrates operations performed by the childcare-voucher Issuer in order to credit a User with voucher credits and redeem "spent" vouchers.

As shown in Fig.2, the childcare-voucher management system of the present invention still involves an Issuer, a Client, a User and a Redeemer as in the known system described above with reference to Fig.1. Moreover, certain of the interactions between the Client and the Issuer are generally of the same nature as the interactions between these parties in the known system of Fig.1. More especially, the Client still places an Order with the Issuer, specifying which employees (Users) are to receive vouchers and the amount of the voucher credit to be allocated to each employee. The Issuer calculates the charge to the Client for this order and sends a bill, B. Typically, the Issuer will await receipt of payment from the Client before filling the order. However, the Issuer may agree to offer the Client credit up to a certain limit, such that an order can be filled even before payment for the bill B has been made.

In any event, when filling an order the system operation is drastically different from the case illustrated in Fig.1. Firstly, the Issuer fills an order, not by issuing vouchers, but by crediting User accounts which the Issuer creates (or has already created in the past) for each of the Users involved (see Fig.3). The User account can be denominated in terms of monetary value or, more generally, in terms of currency-independent units (which term covers units of a product).

When the User has received childcare services, he will wish to pay the childcare provider (Redeemer). This is achieved by the User issuing an authorization for the Issuer to reimburse the childcare provider (Redeemer) by a certain amount. The User sends the Reimbursement Authorization (RA) to the Issuer. If there is sufficient voucher credit in the User account for this User, the Issuer validates the Reimbursement Authorization, deducts an appropriate amount from the User's account and instructs a payment to be made to the Redeemer, as illustrated in Fig.3.

It will be seen that, in the system according to the present invention, vouchers no longer take a physical form. Thus the time delays inherent in printing vouchers and in circulating them between the Issuer, User, Redeemer and back to the Issuer, are eliminated. Moreover, there are no longer two separate operations involved in exchanging a voucher for goods/services and in making a reimbursement request. Instead, there is a single operation (the making of a reimbursement authorization) generally performed by the User. This simplifies the system and significantly speeds up payment of the Redeemer.

A detailed embodiment of one preferred childcare-voucher management system according to the present invention will now be described with reference to Figs.4 to 8.

As shown in Fig.4, the childcare-voucher management system of this embodiment comprises an Issuer's Computer System (ICS) which can be accessed by a User, Redeemer or Client via various channels, notably by computer/modem, 1, or by telephone, 2. When a computer 1 is used to access the ICS, the access is made to the Issuer's website via the internet. When a telephone 2 is used to access the ICS, the access is made to an IVR (interactive voice response) system by calling an appropriate telephone number, the connection being made via the Public Switched Telephone Network (PSTN).

The ICS can be implemented in a variety of ways, for example using one or more information processors (computers, work stations, etc), typically connected together to form a network. The various data items used in the system can be stored in one or more databases. It is to be understood that the invention is not limited by reference to specific hardware used to perform the various system functions nor to the location of storage of the various data items. The manner in which information technology can be employed to realize the various described system functions will be readily apparent to the skilled person from his general knowledge.

The ICS functions can best be understood by considering that the ICS comprises a web front end, a telephone front end, a transactional back end, a general back office portion, and interfaces between the transactional back end and the back office portion.

The web front end has a public section and a private section. The web public front end handles interactions between the ICS and parties, other than the Issuer, accessing the Issuer's website. The web private front end handles interactions between the ICS and Issuer staff accessing the Issuer's website.

In the preferred embodiment of the invention, for access made by a Client, the web public front end handles interactions such as Client login, order entry, management of the Client profile (which profile includes details such as, typically, names of contacts at the client company, the company address, bank account details, etc.), statement consultation by the Client, interrogation of transaction records by the Client, exchange of messages, and ordering of brochures and marketing materials. More particularly, the web public front end ensures that appropriate sequences of screen displays will be generated on the computer 1 in order to effect the relevant operation, transfers data obtained from the computer access event to the transactional back end and outputs appropriate data to the computer 1 in response to validation operations, and other processes, implemented by the transactional back end.

In the preferred embodiment of the invention, for access made by a User, the web public front end handles interactions such as User login, User first time identification, order requests, reimbursement authorizations, management of the User profile (which profile includes details such as, typically, the user's address, the selected PIN, bank account details, etc.), statement consultation by the User, interrogation of transaction records by the User, etc.

In the preferred embodiment of the invention, for access made by a Redeemer, the web public front end handles interactions such as Redeemer login, management of the Redeemer profile (which profile includes details such as, typically, the Redeemer's name and address, bank account details, etc.), statement consultation by the Redeemer, interrogation of transaction records by the Redeemer, and the like.

The web private front end enables staff at the Issuer company to interact with the ICS for administrative purposes, such as interrogation of details of transactions made by a particular Client or User, statement consultation, order entry, generating payment requests, and the like. Advantageously, the web private front end manages the login of Issuer staff and supports functions such as searching for particular Clients and Users, or particular transactions by Clients or Users.

The telephone front end handles interactions between parties accessing the ICS by telephone and the transactional back end. In the preferred embodiment of the invention, for access made by a User, the telephone front end handles operations including first time identification of the user, User login, balance consultation, reimbursement authorizations, order requests and PIN management. More particularly, the telephone front end ensures that appropriate sequences of recorded messages are transmitted to the telephone 2, for example to prompt the caller to make inputs via the telephone keyboard (or vocally, for an appropriately-configured system), or to provide the caller with information. The telephone front end also transfers data obtained from the telephone access event to the transactional back end and outputs appropriate recorded messages or information to the telephone 2 in response to validation operations, and other processes, implemented by the transactional back end.

The web front end and telephone front end serve as interfaces between parties accessing the ICS and the transactional back end. It is the transactional back end which implements the transactions required in system operation, such as debiting and crediting User accounts, ordering payments to Redeemers, calculating billing amounts for orders, updating stored system data (such as profiles of Users, Clients and Redeemers), and the like. It can be considered that the transactional back end performs general management of databases, and integration with Back Office components described below

More particularly, in the preferred embodiment of the invention, the transactional back end cooperates with the web front end to export details of Clients, Client transactions and User transactions to the relevant databases storing Client data, Client transaction data, and User transaction data, respectively. The transactional back end also preferably manages validation of amendments made to open orders, validation of open orders, validation of reimbursement authorizations, validation of PIN changes, validation of amendments of contacts at a Client or Redeemer company, and the like.

In the preferred embodiment of the invention, the transactional back end cooperates with the telephone front end to export details of Users and Redeemers, obtained from the telephone access event, to the relevant databases storing User and Redeemer data. The transactional back end also preferably manages validation of reimbursement authorizations made by telephone, amendments made by telephone to open orders, validation of PIN changes requested by telephone, and the like.

In the preferred embodiment of the present invention, all transactional operations (e.g. reimbursement authorizations) must be authorized by the transactional back end. This ensures security and data integrity.

The childcare-voucher management system of the present embodiment can profitably make use of various known processing modules, such as, conventional accounting software packages used for maintaining Client and User accounts and used for effecting payments (e.g. to redeemers) by bank transfer (e.g. BACS), cheque etc., and known data warehouse software. Such known modules are termed Back Office in Fig.4.

More particularly, in the preferred embodiment of the invention, a known accounting package (for example, a SUN package, any XML (extended markup language) package, etc.) is used for receipt cashing, cheque printing and BACS generation, and a known data warehouse package maintains records of Client, User and Redeemer details, as well as transaction details. The ICS includes appropriate interfaces to the accounting and data warehouse packages, for example, ensuring that data is synchronized between the various modules making up the system.

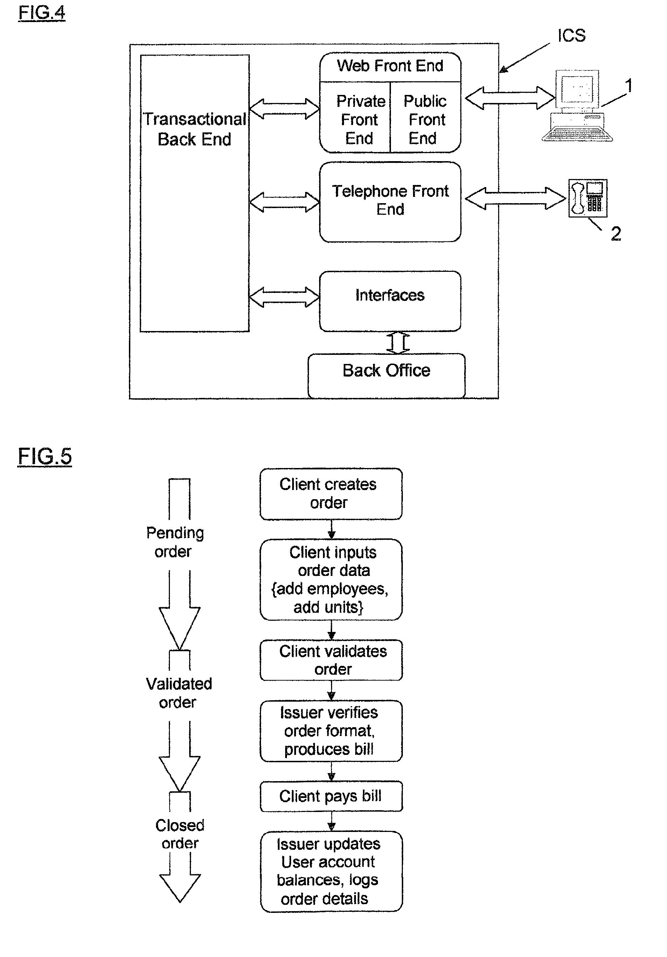

An order-creation function performed in the childcare-voucher management system of this preferred embodiment will now be described with reference to the flow chart of Fig.5. The example of Fig.5 assumes that there is a Client who employs Users and orders voucher credit for the Users from the Issuer.

The Client creates an order indicating the identity of Users who are to receive voucher credit, and the amount of voucher credit each one is to receive. The Client can input the User and amount data in various ways. The Client can access the ICS via the Internet and, after logging in, input an order using a form provided on the Issuer's website. Alternatively, the Client can create an order in the form of a computer file, for example a CSV file (Comma Separated Variable file) an XML file, etc., using a software package. The order can be sent to the Issuer by uploading to the Issuer's website or by electronic file transfer.

When a Client places a first order with the Issuer it is necessary to ensure that the Issuer is provided with data identifying Users, so that User accounts can be set up and User identification codes selected (as described further below).

For an order involving a large number of Users, it may not be convenient for the Client to input the order details all in one go. Input of order data may be interrupted. In order to cater for this possibility, the present preferred embodiment allows order data to be saved and retrieved later on so as to be completed/amended appropriately. Also, the system uses a flag to indicate the status of the order. More particularly, the order is flagged a "pending order" from the time when the order is first created until the time when the Client indicates that the order details have been finalized, the latter operation being termed "validation" of the order by the Client.

Once the order has been validated, the order format is checked at the Issuer. More especially, the transactional back end verifies that mandatory fields are present in the order, that order data is consistent, etc. Then a bill is generated and presented to the Client, for example via a pro forma invoice that can be printed out from the website, or in any other convenient manner. Typically, the billed amount will be more than the monetary equivalent of the totalized token credit specified in the order because the Issuer raises a service charge. Also, in the case of a first order, or an order involving a new User, the transactional back end may calculate an additional "delivery charge", relating to the cost of mailing information/identification code data and the like to Users.

The status of the order continues to be flagged as "validated" until the Issuer is satisfied that the bill has been paid or payment of the bill has been ordered (e.g. by ordering an appropriate direct debit) or, in a case where the Client has an account with the Issuer, the Client has a credit balance greater than the billed amount. Advantageously, it is the transactional back end which verifies that the bill has been paid or bill payment has been arranged or the client credit balance is sufficiently high.

When the transactional back end has confirmed that the order bill has been paid (or payment has been arranged/sufficient credit exists), the order is designated a "closed" order and the ICS proceeds with updating User account balances to add thereto the voucher credit specified in the order.

Alternatively, in preferred embodiments of the invention, the system supports the concept of a "release date" for token credit. That is, the Client has the option of specifying in his order a release date at which the token credit specified in the order should be added to User accounts. Before designating an order to be a "closed" order, the ICS is adapted to verify not just that payment for the order has been received (or arranged/sufficient credit exists) but also to check that the release date has been reached or exceeded.

In the preferred embodiments of the present invention, a transaction journal is established recording details of all orders, and the records of orders (or of a certain number of the most recent orders) can be consulted, typically by the Client who has placed the order, and by staff of the Issuer company. The transaction journal may include a note of the status flag applicable to each order (i.e. "pending", "validated" or "closed").

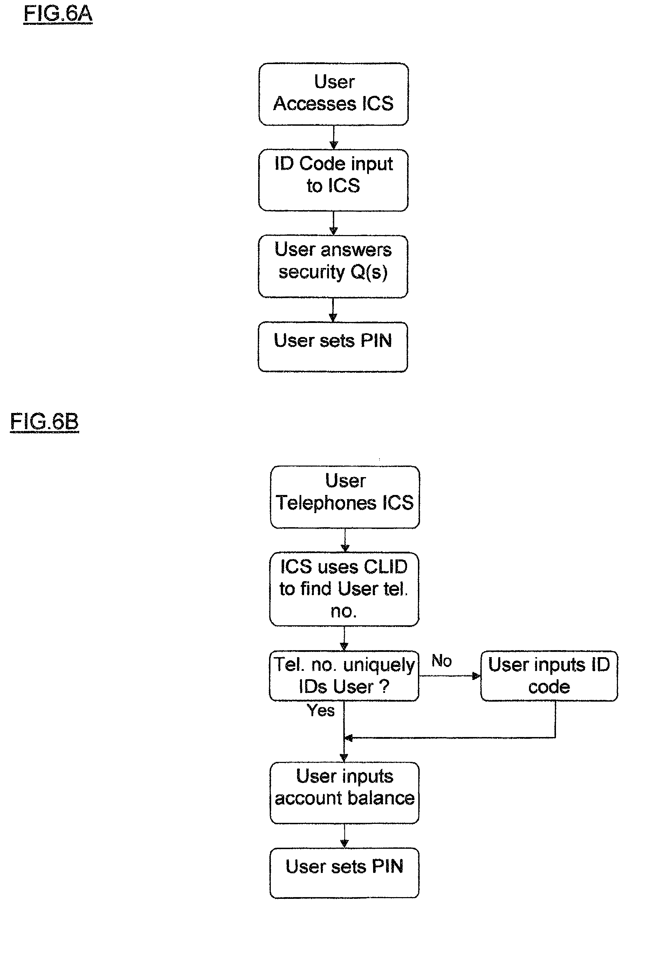

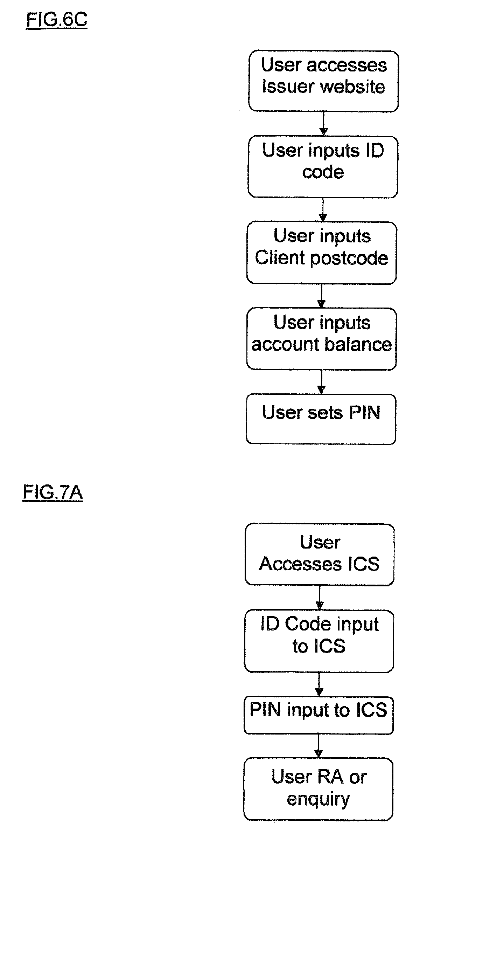

As explained above, in the token-management system of the present embodiment, the User must interact with the Issuer's server and, preferably, this will be via a telephone call or accessing a website associated with the Issuer. In order to be able to interact with the Issuer's server, the User must first be identified to the system. The first-time-identification process according to the preferred embodiment of the invention will now be described with reference to the flow charts of Fig.6. Fig.6A is a generalized flow chart illustrating the basic steps of the preferred process for User first-time-identification, whereas Fig.6B relates to the preferred process for first-time-identification during telephone access to the ICS and Fig.6C relates to the preferred process for first-time-identification during computer access to the ICS.

As illustrated in Fig.6A, when the User accesses the ICS a User-identification code must be provided to the ICS. In general, the User-identification code will be generated by the Issuer and sent to the User when his details are first registered on the system (e.g. as a result of the Client sending the Issuer a list of employees for whom tokens will be issued). The User-identification code will be a string of characters (letters, numbers, symbols, ...) sufficient to provide each User of the system with a unique code. The identification code may be provided to the User on a plastic card, or other suitable recording medium, such that the User need not commit it to memory.

At this stage, in the preferred embodiment, there is no PIN set for this user. Accordingly, as a measure to ensure that the User is who he claims to be, the User must provide at least one additional item of information. Advantageously this is achieved by prompting the User to answer one or more security questions. In the preferred embodiment of the invention, the identification code and the at least one additional item of identifying information are derived from different sources, so as to improve security. For example, the identification code is typically derived from the Issuer and the additional item of information can be derived from the Client. If the at least one additional item of information input by the User is valid, then the User is allowed to go on and set a personal identification number (PIN) that will be used in subsequent logon operations.

In some circumstances, it can be possible to avoid the need for the User to input his identification code. In particular, when the User accesses the ICS by telephone, Calling Line Identification can be used by the ICS to determine what is the User's telephone number (see Fig.6B). The calling-User's telephone number is then compared with the telephone numbers stored for the various Users registered on the system. If the detected telephone number matches only one User, U₁, then the telephone number identifies the caller as U₁. Accordingly, there is no need to require the calling-User to input any further information or code to identify himself. If the telephone number matches more than one User registered in the system (for example, because the telephone number registered for two Users is their work telephone number), then a recorded message instructs the caller to input his identification code.

Once the User has been identified, he can then be prompted to input an additional item of information, such as the balance on the User's account. The User will, in general, be provided with this information by the Client company. Thus, the User first-time-identification in this case does make use of two data items derived from different sources. Presuming that the User has called from the appropriate telephone number, and has input the correct additional information (credit balance), the User is then prompted by a recorded message to set a PIN using the telephone keypad.

In the case where the User accesses the ICS for the first time by accessing the Issuer's website using a computer/modem, as in Fig.6C, the User inputs his identification code. In this case, it could be considered that the reliability of this code as an identifier of the User is lower than in the case where the User telephones from the appropriate telephone number. Accordingly, in this case it is preferred to make the User input two items of additional information. As illustrated in Fig.6C, the User is prompted to input the postcode of his employer (the Client) as well as his own User account balance. Once again, the various input items of identifying data come from different sources such that the security of the identification process is enhanced. Once again, presuming that the User has input the correct identifying code and additional information, the User is then prompted to set a PIN.

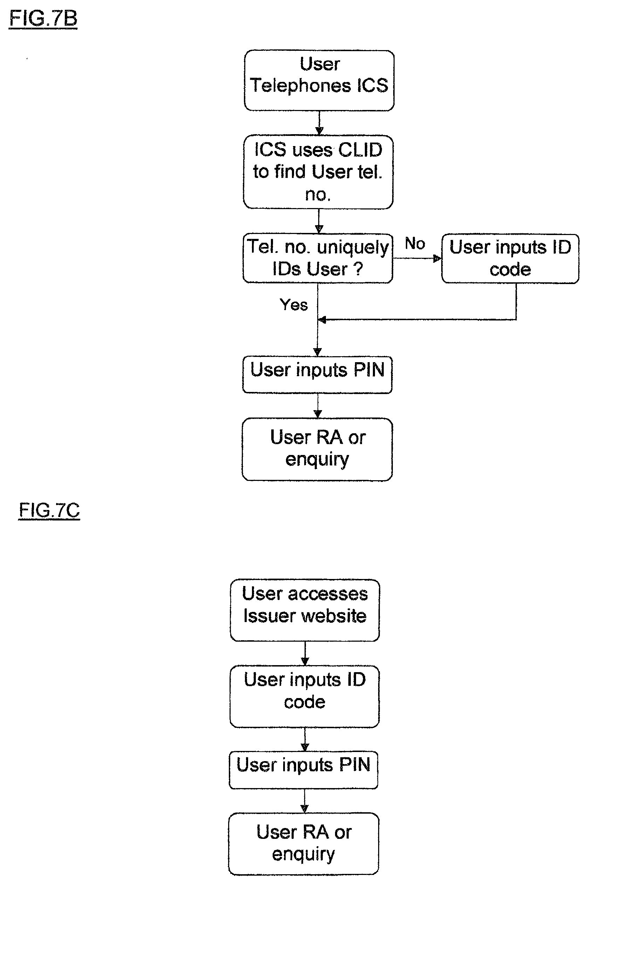

Fig.7 illustrates the preferred process for managing User logon on occasions subsequent to the first-time-identification. Fig.7A illustrates the basic steps of the preferred process in a generalized way, whereas Fig.7B illustrate a preferred User logon process for use during telephone access, and Fig.7C illustrates a preferred User logon process for use during access to the Issuer's website.

As shown in Fig.7A, on occasions after the User has first identified himself to the system, when the User tries to logon to the ICS he must input his identification code and his chosen PIN. The transactional back end handles the verification that the identification code and PIN are correctly entered. If they are correctly entered, then the user can proceed to performing substantive interaction with the system, such as authorizing a reimbursement to a Redeemer, making an enquiry (e.g. interrogating the system for details of the last transaction), changing the PIN, etc.

When the User logon is attempted during telephone access, as in Fig.7B, input of the User identification code can be omitted if the User can be uniquely identified using Calling Line Identification (CLID). When the User logon is attempted during computer access to the Issuer's website, the identification code is input by the User, as shown in Fig.7C.

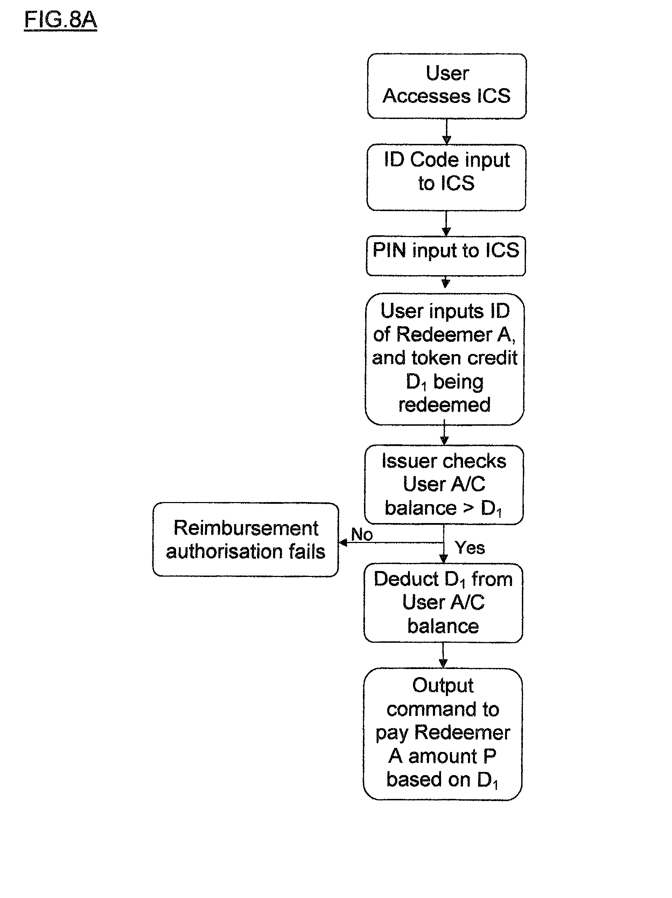

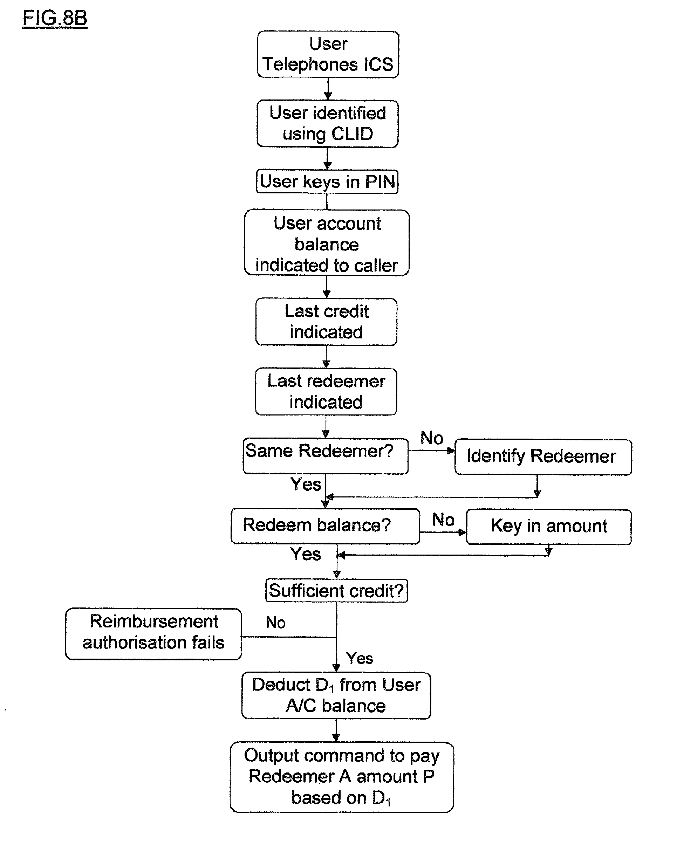

The process for authorizing reimbursement of a Redeemer according to the preferred embodiment of the invention will now be described with reference to the flow charts of Figs.8A and 8B. Fig.8A indicates the basic steps of the preferred process for handling reimbursement authorizations, whereas Fig.8B illustrates a preferred process used in the case of telephone access to the ICS.

In the preferred embodiment of the present invention, it is not the provider of goods or services who requests reimbursement of voucher credit he has accepted, rather it is the User who authorizes reimbursement by issuing a reimbursement authorization to the ICS. More particularly, in order to authorize a reimbursement to a Redeemer who has provided (or is providing) goods and/or services to the User, the User accesses the ICS, logs in by providing his identification code to the system (whether by CLID or otherwise) and by inputting his PIN, then inputs a reimbursement authorization. The reimbursement authorization (RA) indicates the Redeemer to whom reimbursement should be made (designated Redeemer A in Fig.8A), and the amount of voucher credit being redeemed (designated D₁ in Fig.8A). The Issuer checks whether or not the User account has a voucher credit balance greater than or equal to the amount D₁ being redeemed. If "yes", the issuer designates the reimbursement request as validated, deducts D₁ from the User account balance and orders the making of a reimbursement of amount P to the designated Redeemer. If "no", the reimbursement authorization is rejected. Moreover, preferably, the User is provided with an indication that his reimbursement authorization has been validated. In practice, the transactional back end performs the verification of sufficient User account credit and issues the reimbursement command to the accounting package.

In preferred embodiments of the invention, when the User has successfully logged on to the system he is informed of the last credit that has been made to his user account and/or the credit balance in the User account. He is also preferably informed of the Redeemer reimbursed as a result of his last validated reimbursement authorization. If the User wishes a reimbursement to be made to this same Redeemer, he is provided with the possibility of simply accepting the old Redeemer as the Redeemer for his current reimbursement request, for example by pressing an appropriate key on his telephone keypad or computer keyboard. This speeds up the reimbursement authorization process.

Moreover, it is advantageous if the User is informed not only of the Redeemer reimbursed as a result of the User's last validated reimbursement authorization but also of the amount reimbursed. In this way, if there is a breakdown in communications between the User and the ICS during processing of a reimbursement authorization, such that the User has not received confirmation that his reimbursement authorization has been validated, he can simply logon to the system once more and check the details of the last validated reimbursement authorization recorded in the system.

The amount P reimbursed to the Redeemer is based on the voucher credit specified in the reimbursement authorization. However, the voucher credit may not be denominated in a monetary amount; it may be denominated in terms of currency-independent units, such as units of a product (e.g. 4 hours of childcare) or currency-independent monetary units for which a suitable exchange rate is defined in a stored table, or the like. More particularly, in the case of a token denominated in terms of currency-independent monetary units, the transactional back end may have access to a register storing data indicating, for example, that 1 such unit is equivalent to 20 pence (Sterling), 5 cents (Euro), 30 cents (US dollars), etc. The token value may be defined in a manner which combines these two concepts - for example 1 token may represent 1 eye examination which can be reimbursed at different amounts denominated in different currencies.

The transactional backend accesses information enabling the voucher credit to be converted to an appropriate monetary amount - for example, it may access the tariff of the Redeemer receiving the reimbursement. In a case where the tokens are denominated in terms of currency-independent monetary units, the transactional backend accesses the stored data indicating the exchange rate to be applied to convert the token credit into an appropriate currency for the reimbursement. The appropriate currency can be determined from any of a variety of factors including, but not limited to, the country mentioned in the registered address of the Redeemer to be paid, a country or currency code input as part of the Reimbursement authorization, and a country or currency code specified as part of the User's or Redeemer's profile.

Moreover, the Issuer may levy a charge for the service of reimbursement, either by deducting more than D₁ from the User account or by reducing the monetary amount reimbursed to the Redeemer.

Fig.8B illustrates one preferred process for effecting reimbursement authorizations when a User accesses the ICS by telephone. As can be seen, the User identity is determined by CLID (or by entering his ID code, if CLID did not enable him to be uniquely identified), and the User inputs his PIN using his telephone keypad or vocally (in cases where the system supports voice recognition). An oral message is generated and played to the User to inform the User of the balance of his user account. An oral message is then generated and played to the User to inform the User of the last credit to his User account. An oral message is then generated and played to the User to inform the User of the last Redeemer reimbursed as a result of a validated reimbursement authorization issued by him. The User is asked to confirm if the Redeemer is to be the same in the repent reimbursement authorization. Confirmation can be given by pressing a designated key on the telephone keypad or orally. If the same Redeemer is to be reimbursed, the User is next prompted to indicate whether the full amount of his user account balance is to be credited to the Redeemer. If "yes", the User presses a designated key or provides oral confirmation. If "no", the User keys in the voucher-credit amount being redeemed. If the Redeemer to be reimbursed is not the same as the old one, the User indicates this fact and enters the name or code for the redeemer to be reimbursed. Preferably the name or code is played back so that the User can confirm or correct it. The process then continues as before.

In order for the system to be able to order payments reimbursing Redeemers it is necessary for the Redeemers to be registered with the Issuer system. Typically, registration ensures that there is a record stored in the system (ICS) indicating an identification code allocated to the Redeemer, together with details of the payment method(s) to be used for reimbursing this Redeemer, for example is reimbursement to be made by cheque or bank transfer, bank account details, etc. In general, the record will also indicate the Redeemer's name and address. Registration may also be necessary in order for the Issuer to check that the Redeemer meets conditions set by government regulations (for example, the Redeemer is a registered childminder).

In the preferred embodiments of the invention, the Redeemer can logon to the ICS so as to check the last transactions involving reimbursement to him. In this case, the Redeemer can logon to the system by inputting a username and password provided by the Issuer. However, the Redeemer can be offered the possibility of changing his login details..

An alternative embodiment of token-management system according to the present invention will now be described with reference to Fig.9. In the embodiment of Fig.9, a reimbursement request is made jointly by the Redeemer and the User, for example using a dedicated input device 10 which accesses the ICS, for example using a telephone line. The Redeemer uses the keypad of the device 10 to input the token credit to be reimbursed, as well as his identification code. The User keys in his identification code and/or PIN in order to authorize the reimbursement. If the user account has sufficient token credit, and appropriate identification codes/PIN have been input, then a corresponding reimbursement is made to the Redeemer.

In the embodiment of Fig.9, it is not essential to use the dedicated input device 10; the system can be configured to allow the Redeemer/User to telephone the ICS to make the reimbursement request. As another variant, the User can be provided with a card bearing his identification number in machine-readable form (for example, a barcode), such that physical keying-in of that code is unnecessary.

The token-management system of the present invention provides a large number of advantages, including the following. Paper-handling is reduced to a bare minimum, thus saving staff time and costs. There is better tracking of transactions (User transactions and Client transactions if there is a Client) and parties can readily inspect details of their transactions. For a Redeemer, reimbursement for provision of goods and/or services is speeded up and he can easily check that a validated reimbursement has been ordered. For a User, he has rapid confirmation that reimbursement has been ordered, thus avoiding the stress of possible recriminations from the Redeemer.

Furthermore, in the preferred embodiments of the present invention the record of User token credit is stored and updated centrally, which enables close tracking of the status of issuing/redemption/reimbursement of tokens.

Although the present invention has been described above in terms of features of certain preferred embodiments thereof, it is to be understood that the invention is not limited by reference of these detailed features. More particularly, the skilled person will understand that numerous replacements, developments and modifications can be made to the features of the preferred embodiments without departing from the scope of the invention as specified in the appended claims.

For example, although the above-described preferred embodiments relate to token-management systems in which token credits are ordered from the Issuer by a Client who is an intermediary between the Issuer and the User, the token credits could be ordered directly by the end Users (for example, because there is no intermediate Client). In such a case, it will be the User who inputs order details and pays the Issuer in respect of the token credit specified in the order. In appropriate cases, a User may receive token credit without any payment being made to the Issuer (for example, in the case where the Issuer is the User's employer and the token credit represents an award made to the User, for example, to reward long service). In such cases, the memory update means which updates User account balances is programmed so as not to await payment for the order before effecting the updates.

Moreover, in the above-described example, order data was collated by a Client (in practice, this will generally be an employee in the human resources department of a Client company). However, collation of the necessary order data (User details, etc) can be outsourced, for example to a company external to the Client, or the Users can be required to input their own details.

In the childcare-voucher management system of the above-described preferred embodiment, in a case where a Client specifies a release date for token credit it was stated that an order for token credit would be designated a "closed order" only when the release date has been reached or exceeded. However, it would also be possible to configure the system differently. For example, the system could continue to use the "closed" status flag to designate a validated order for which payment has been received (or payment arranged, or for which sufficient credit exists) and use an additional value for the order status flag (e.g. "fillable") to indicate that the release date for the order has now been reached. In such a case, the User Account balances would only be updated when the order status flag takes the value "fillable". As another example, the value of the order status flag could be kept independent of the reaching/exceeding of a release date and a separate flag could be used to indicate whether the release date exists/does not exist, has been reached/not yet reached.

In the above-described preferred embodiment where accesses are made to the Issuer's Computer System via telephone, it is stated that the caller can be prompted to make certain inputs, for example by playing an appropriate recorded message to the caller. However, other forms of prompting could be envisaged - for example, a sequence of tones of different pitches could be played, the caller having been instructed beforehand which input should be made on hearing each tone. Also, the telephone front end/interactive voice response system handling the interface with a telephone caller can be programmed to personalize the messages output to a User once the User has been identified, for example, by inserting the Users name in the played messages.

## Claims

1. A token-management system, in which tokens are credits offerable by a user in exchange for products of a specified kind, the token credit being issued to users by an issuer, the system comprising:
memory means for storing user account data for each user;
input means for receiving an order, said order specifying an amount of token credit to be allocated to a user;
memory update means adapted to update user account data held in the memory means whereby to add to the user account the amount of token credit allocated to said user in said order;
input means for receiving a reimbursement authorization from a user, said reimbursement authorization including data indicating the amount of token credit to be reimbursed, and data identifying a redeemer to whom reimbursement is to be made; and
verification means adapted to consult the user account data held in the memory means whereby to verify that the user issuing the reimbursement authorization has token credit sufficient to pay the token credit amount specified in the reimbursement authorization and, when the token credit in the user account is sufficient, to validate the received reimbursement authorization;
wherein the memory update means is further adapted, when a reimbursement authorization is validated, to update the user account data whereby to debit from the user account the amount of token credit specified in the reimbursement authorization; and
wherein the system further comprises means for issuing a payment command in response to the verification means validating a reimbursement authorization, said payment command ordering a payment to the redeemer specified in the validated reimbursement authorization of an amount based on the token credit specified in the validated reimbursement authorization.

2. The token-management system according to claim 1, and comprising means for determining the payment status of an order received by the input means, said payment status having a value selected from the group consisting of :
order not yet paid for, order paid for, order within credit limit of ordering party, and
order without charge; wherein the memory update means is adapted to update user account data held in the memory means in response to a received order only when the payment status determined for said order takes a predetermined value.

3. The token-management system according to claim 1 or 2, and comprising means for determining a release date applicable to an order received by the input means, said release date indicating a date at which token credit can be released to the user(s) specified in said order; wherein the memory update means is adapted to update user account data held in the memory means in response to a received order only when the release date determined for said order has been reached or passed.

4. The token-management system according to claim 1, 2 or 3, wherein the input means is adapted to receive orders and reimbursement authorizations by electronic means selected in the group consisting of telephone communications, electronic file transfer and communications on the worldwide web.

5. The token-management system according to any previous claim, wherein the tokens are credits offerable in exchange for products having a predetermined nature.

6. The token-management system according to any previous claim, wherein the tokens are credits offerable in exchange for products provided by a predetermined set of merchants and/or service providers.

7. The token-management system according to any previous claim, wherein token credit is denominated in units of product, and the system further comprises calculation means for processing a reimbursement authorization whereby to convert the specified token credit into a monetary amount to be paid to the redeemer.

8. The token-management system according to any previous claim, wherein a unit of token credit has different monetary equivalents in different currencies, and the system comprises:
means for storing indications of said monetary equivalents in different currencies; and
means for calculating the monetary equivalent, in a specified currency, of a specified number of units of token credit.

9. The token-management system according to any previous claim, wherein the products consist in at least one item selected in the group consisting of goods and services.

10. The token-management system according to any previous claim, and comprising means for verifying the identity of a user, said user-identity verification means requiring, in a first mode, input of at least an identification code and a personal identification number (PIN), wherein the system is adapted to validate a reimbursement authorization only when the user-identity verification means has successfully verified the identity of the user issuing the reimbursement authorization.

11. The token-management system according to claim 10, wherein the input means is adapted to receive reimbursement authorizations via telephone calls, there is provided means for detecting calling-line identification data included in a received telephone call and for determining whether the detected calling-line identification data matches a telephone number stored for one user, and said user-identity verification means is adapted to skip input of said identification code when the calling-line identification data is determined to match a telephone number stored for one user.

12. The token-management system according to claim according to claim 10, wherein said user-identity verification means is adapted, in a second mode, to verify the identity of the user from said identification number and at least one item of additional data, and there is provided personal identification number setting means adapted to allow the user to set a personal identification number (PIN) when the user identity has been verified by the user-identity verification means operating in said second mode.

13. The token-management system according to claim 9, wherein said at least one item of additional data comprises the value of the current balance of token credit in the user account.

14. The token-management system according to any previous claim, and comprising means for outputting, to a user, data relating to the preceding validated reimbursement authorization received from said user.

15. The token-management system according to any previous claim, and comprising means for outputting, to a redeemer, data relating to the preceding validated reimbursement authorization received for reimbursement of said redeemer.

16. The token-management system according to any previous claim, and comprising means for outputting, to a user, data indicative of the identity of a redeemer reimbursed in response to the preceding reimbursement authorization received from said user, and a user indication of acceptance of the previously-reimbursed redeemer serves as data identifying a redeemer to be reimbursed in response to the current reimbursement authorization.

17. The token-management system according to any previous claim, and comprising means for generating and updating the value of a flag indicative of order status, said flag taking a first value when creation of the order has begun but values of the order data have not been finalized, a second value when values of the order data have been finalized but payment for the order has not yet been received by the issuer, and a third value when payment for the order has been received by the issuer, wherein the memory update means only updates user account data to add token credit specified in an order when the flag for said order takes said third value.

18. The token-management system according to any previous claim, and comprising an automated document-ordering module.

19. A childcare-voucher management system, comprising a token-management system according to any previous claim in which the tokens are credits exchangeable for childcare services.
